# EUROPEAN PATENT SPECIFICATION

(11) **EP 4 652 018 B1**
(45) Date of publication and mention of the grant of the patent: **29.04.2026**
(21) Application number: 23727351.1
(22) Date of filing: 17.05.2023
(51) Int. Cl.: B25J 9/16, G01N 21/3581, G01N 29/22, G01N 29/265, G05B 19/00, G01B 11/02, G01B 11/06, G01B 21/04

(54) **CONTACTLESS DETECTING A PHYSICAL FEATURE OF A MATERIAL**
KONTAKTLOSE DETEKTION EINES PHYSIKALISCHEN MERKMALS EINES MATERIALS
DÉTECTION SANS CONTACT D'UNE CARACTÉRISTIQUE PHYSIQUE D'UN MATÉRIAU

(30) Priority: 31.03.2023 EP 23382318
(43) Date of publication of application: 26.11.2025
(73) Proprietor: Das-Nano Tech, S.L., 31192 Tajonar (ES)
(72) Inventor: SUBIZA GARCÍA, Mikel, 31192 TAJONAR (ES); MARTÍNEZ DE MORENTIN SUESCUN, Cristian, 31192 TAJONAR (ES); INÉS ORTIGOSA, Andrea, 31192 TAJONAR (ES); MIRANDA SANTAFÉ, Luis, 31192 TAJONAR (ES); TABOADA CABELLOS, Elena, 31192 TAJONAR (ES); AZANZA LADRÓN, Eduardo, 31620 GORRAIZ (ES); PERCAZ CIRIZA, Jon Mikel, 31006 PAMPLONA (ES); LUMBRERAS SÁDABA, Carlos, 31293 SESMA (ES); RUBIO LAMANA, Adrián, 26004 LOGROÑO (ES); PABOLLETA MARTORELL, Asier, 31013 BERRIOZAR (ES); ARNEDO GIL, Israel, 31192 TAJONAR (ES)
(74) Representative: ZBM Patents - Zea, Barlocci & Markvardsen
(86) International application number: PCT/EP2023/063213
(87) International publication number: WO 2024/199688

(56) References cited:
- US-A1- 2018 361 595
- US-A1- 2019 128 661
- US-A1- 2022 091 028

## Description

This application claims the benefit of European Patent Application EP23382318.6 filed 31 March 2023.

The present disclosure relates to methods of contactless detecting a physical feature of a material and to systems and computer programs suitable to perform such methods.

### BACKGROUND

Different methods and systems are known in the state of the art for contactless determining a physical feature of a coating material. Typical features that are extracted by said known methods and systems may be thickness of one or more layers in a layered coating material, electrical parameters such as, e.g., complex refractive index, conductance, resistance, etc. or any other physical feature attributable to a material such as, e.g., hardness, adherence, defects, voids, discontinuities, etc.

Such prior art systems typically require that a contactless sensor is at a predefined position with respect to the material to properly operate, i.e. to detect with acceptable accuracy the physical feature of the material. In some cases, such a positioning of the contactless sensor is not accurate enough and this may result in bad or not good enough measurements in, e.g., curved surfaces. In other cases, the positioning may be inefficient because, e.g., too much time is needed to achieve valid positioning of the contactless sensor. Known systems for contactless determining a physical feature of a material may also be expensive and may not be robust enough. It is thus desirable to provide systems of this type that are cheaper and more robust to be less prone to errors.

Another disadvantage of prior art contactless measuring systems may be that different instances of the material to be inspected in, e.g., a manufacturing or assembling line, may arrive at measuring or control stage under variable or distinct conditions, with respect to the positioning, from one to another instance of the material. For example, different instances of same kind of object may reflect the variability of manufacturing processes and transportation systems. These changing conditions may require the contactless measuring systems to have some kind of adaptability which is very difficult to implement. Accordingly, when variable conditions of said type are present, prior art contactless systems tend to detect badly or inaccurately the physical feature of the target material.

US2018361595A1 discloses a system using distance sensors to align a scan sensor with a surface, but does not implement a positioning loop with target reflections updated over time based on sensed data. US2022091028A1 relates to a Terahertz measuring head optimizing its distance to a surface, without cooperation between scan and position sensors. US2019128661A1 uses reflected signal amplitude for alignment but does not involve iterative comparison with target reflections or their update.

An object of the disclosure is to provide new methods, systems and computer programs aimed at improving prior art manners of contactless detecting a physical feature of a material.

### SUMMARY

In an aspect, methods are provided of contactless detecting a physical feature of a material through a sensor head and a positioner thereof, the sensor head including at least three position sensors and a scan sensor coupled with each other, the scan sensor having a position requirement relative to the material correlated with a target reflection associated to each of the position sensors. Such methods (also denominated detector methods herein) include performing a positioning loop with positioning iterations to cause the scan sensor to converge to satisfaction of the position requirement, verifying satisfaction or dissatisfaction of the position requirement and, in case of dissatisfaction, performing an optimizing loop with optimizing iterations until an interaction property results optimized corresponding to satisfaction of the position requirement. Detector methods further include, once the position requirement is (or has been) satisfied, operating the scan sensor to irradiate the material and to first sense interaction of said irradiation with the material and detecting the physical feature depending on said first sensed interaction.

Each of the positioning iterations includes operating each of the position sensors to radiate the material and to first sense reflection of said radiation with the material and determining consistency or inconsistency between said first sensed reflection and its associated target reflection and, in case of consistency, quitting the positioning loop and, in case of inconsistency, operating the positioner depending on the determined inconsistency to start new iteration of the positioning loop with the sensor head repositioned.

Each of the optimizing iterations includes operating the scan sensor to irradiate the material and to second sense interaction of said irradiation with the material, obtaining the interaction property from said second sensed interaction and determining whether said interaction property is optimized or non-optimized and, if non-optimized, operating the positioner depending on said interaction property to start new iteration of the optimizing loop with the sensor head repositioned and, if optimized, quitting the optimizing loop, operating each of the position sensors to radiate the material and to second sense reflection of said radiation with the material and updating the target reflections depending on said second sensed reflections.

Terms "first" and "second" are used herein to distinguish between (first) sensing of interaction (by scan sensor) to determine the physical feature and (second) sensing of interactions (by scan sensor) in optimizing loop, and also between (first) sensing of reflections (by position sensors) in positioning loop and (second) sensing of reflections (by position sensors) to update target reflections after execution of the optimizing loop.

Proposed detector methods are based on attempting to position the scan sensor to fulfil its positional requirement by using only the position sensors and, if it is (finally) considered not possible to accurately satisfy the positional requirement with only the position sensors, the scan sensor is subsequently used to refine its own positioning in cooperation with the position sensors. Once satisfaction of the positional requirement has been achieved thanks to said cooperation, the position sensors are operated to obtain sensed reflections under satisfaction of the position requirement (of the scan sensor) and said sensed reflections are used to update the target reflections to be considered in next execution(s) of the detector method. This function of updating the target reflections is denominated updating functionality herein. If the positional requirement has been fulfilled by using only the position sensors, said updating functionality may be performed (to maximize accuracy of the target reflections) or may not be performed (because sensed and target reflections have been determined consistent to each other).

The updating functionality may include designating second sensed reflections under satisfaction of the position requirement as (new) target reflections. Alternatively, the updating functionality may include using not only the current second sensed reflections (under satisfaction of the position requirement) but also first sensed reflections and/or second sensed reflections from previous executions of the method.

Detector methods according to present disclosure thus have various advantages in comparison to prior art systems with same or similar purpose. Detector methods are dynamically calibrated in such a manner that more accurate measurements may be produced and/or not good enough measurements may be avoided, even in case of difficult measuring conditions such as, e.g., curved surfaces on the material to be inspected, effective surfaces not coinciding with real surface of the material, etc. The concept of effective surface is explained in other parts of the description. Detector methods are self-adaptable to changing conditions in, e.g., a manufacturing line. Detector methods are efficient because most positionings will be based only on the position sensors while the scan sensor will intervene in its own positioning just in punctual situations of unexpected conditions.

The positioning loop may be quitted or terminated with no satisfaction of the position requirement if/when a maximum number of positioning iterations (i.e., iterations of the positioning loop) has been reached or, alternatively, a maximum iterating time (i.e., of the positioning loop) has elapsed. In other words, the positioning loop iteratively attempts to validly position the scan sensor by operating only the position sensors but limited to maximum iterations or maximum iterating time. If maximum iterations/time is reached, it is considered that valid positioning based on only position sensors is not possible and, therefore, the positioning loop is ended.

The positioning loop may also be quitted or terminated because first sensed reflections and target reflections are consistent with each other and, therefore, the position requirement is satisfied. Such a consistency may be defined in terms of, e.g., absolute or non-absolute equality between each of the first sensed reflections and its associated target reflection, depending on a distance function between each of the sensed reflections and its associated target reflection such as e.g. mean square error, etc. Non-absolute equality may refer to equality plus/minus some acceptable error or tolerance (threshold-based comparison).

The interaction property may be obtained from the second sensed interaction (performed by the scan sensor) based on, for example, a time domain processing and/or a frequency domain processing of the second sensed interaction. Such an interaction property may be or may include one or more time domain and/or frequency domain processing parameters of the second sensed interaction. Time domain processing parameters of the second sensed interaction may include, e.g., energy, intensity, peak position, correlation with reference signal etc. Frequency domain processing parameters of the second sensed interaction may include, e.g., magnitude, energy, bandwidth, SNR, dynamic range, water absorption frequencies, correlation with reference signal etc.

The optimizing loop may be based on or may be implemented as an optimization method aimed at finding a position of the sensor head that optimizes an objective function representing evolution of the interaction property depending on (re)positioning of the sensor head. Optimization method may repeatedly vary position of the sensor head to cause the objective function representing the interaction property to converge to its (or to a) maximum or, in other words, to an optimized interaction property. Optimization method may be based on, e.g., trying all possible sensor head's positions to select the one maximizing the interaction property, or based on gradient calculation starting from an initial value or values of the interaction property, or based on a genetic algorithm, or based on a least squares method, etc. Optimization methods and how they may be implemented (in diverse manners) are known in the technical field at hand, so no detailed information about them is disclosed herein.

The scan sensor may be a Terahertz-based scan sensor, in which case the operating of the scan sensor may include operating it to emit Terahertz-based irradiation to the material and to first/second sense Terahertz-based interaction of said Terahertz-based irradiation with the material, thereby obtaining first/second sensed Terahertz-based interaction. Alternatives to Terahertz technology in detector methods according to present disclosure may be, e.g., photothermal technology, ultrasound technology, etc.

The position sensors may be laser-based position sensors, in which case the operating of each of the position sensors may include operating each of them to emit laser-based radiation to the material and to first/second sense laser-based reflection of said laser-based radiation with the material, thereby obtaining first/second sensed laser-based reflection. Alternatives to laser technology in detector methods according to present disclosure may be, e.g., ultrasound technology.

The position requirement of the scan sensor relative to the material may include, for example, a required predefined distance between the scan sensor and a point or position of a target surface of the material where (or at which) the irradiation from the scan sensor is to interact with, and/or a required predefined incidence angle or inclination of the irradiation from the scan sensor with said point or position of the target surface. This target surface (or to-be-irradiated surface) may be an effective surface of the material to be inspected. Effective surface of the material may either coincide with or differ from the real surface of the material and refers to a theoretical surface respect to which the scan sensor (i.e. the sensor head) is to be positioned according to its predefined positional requirement.

If, for example, the material to be inspected has a layered structure with layer(s) of varying or non-uniform thickness or composition, the effective surface to be considered may not coincide with the (real) surface of its outermost layer or, in other words, the surface of the material faced or to be faced or to be irradiated by the scan sensor to operate.

Points (or positions or regions) at which radiations from position sensors are to reflect with the material and point (or position or region) at which irradiation from scan sensor is to interact with the material under satisfaction of the position requirement may define together an incidence material surface. The target reflections (used to attempt to correctly position the sensor head by operating only the position sensors) may be predefined depending on said incidence material surface.

Target reflections may be experimentally predefined in, e.g., a calibration step previous to (massively) performing detector methods according to present disclosure in, e.g., a manufacturing or mounting or production line. This calibration may be carried out by, e.g., performing detector method with initial target reflections predefined arbitrarily or deliberately erroneous to cause first execution of the method to define accurate target reflections based on cooperation between scan sensor and position sensors.

The position requirement of the scan sensor relative to the material may be predefined (properly) correlated with each of the target reflections associated to each of the position sensors in such a manner that consistency or correspondence between each of the first sensed reflections (by each of the position sensors) and its associated target reflection corresponds to satisfaction of the position requirement. Such a correlation between the position requirement of the scan sensor and each of the target reflections, which may be (e.g., experimentally) predefined in a preliminary calibration step, may permit positioning the scan sensor relative to the material very efficiently by using only the position sensors. This is possible because following instances/objects to be inspected are supposed to have more accurate target reflections to position the scan sensor properly. Of course, if different points or regions of the material are to be inspected, each of said points may have its particular associated target reflections. As commented before, this calibration may be achieved by performing detector method with arbitrary (or deliberate nonsense) target reflections to cause self-calibration of the detector method by itself.

In some examples, each of the first/second sensed interactions (by the scan sensor) may be or may include a first/second sensed reflection-based interaction and/or a first/second sensed transmission-based interaction.

The material to be inspected may have a layered structure including one or more layers with an outermost layer and possibly one or more inner layers, and the physical feature to be detected may be a property of the layered structure. Examples of such a property of the layered structure may include thickness of at least one layer in the layered structure, electrical parameters (e.g., complex refractive index, conductance, resistance, etc.), or any other physical feature (or non-electrical property) attributable to a material such as, e.g., hardness, adherence, formation defects, formation voids, formation discontinuities, etc. or any combination thereof.

In detector methods configured to inspect layered materials, the position requirement of the scan sensor may include a required predefined distance between the scan sensor and the visible or real surface of the outer (or outermost layer) of the layered material and/or a required predefined irradiation incidence angle or inclination with respect to the visible or real surface of the outer layer (or outermost layer) of the layered material. Visible or real or visually identifiable or to-be-radiated or radiable surface of the outer(most) layer refers to that surface of the material which is visible, or which is to be faced by scan and position sensors to operate, or which is to be radiated by position sensors and irradiated by scan sensor, or which contacts environmental air or space. In alternative implementations, the position requirement may include a required predefined irradiation incidence angle or inclination with respect to the outer and inner layers of the layered material as a whole. Outer and inner layers as a whole refers to that all the layers or some of them will interact with irradiation from scan sensor and, therefore, whole layered structure is taken into account to define the position requirement.

In examples, the material may be a layered material and effective surface of the material may correspond to real or visible or visually identifiable or to-be-radiated or radiable surface of an outermost layer of the layered material.

Alternatively, the effective surface may not coincide with the real or visible or visually identifiable or to-be-radiated or radiable surface of the outermost layer, in which case the positional requirement may be defined with respect to outer and inner layer(s) of the layered material as a whole. In this latter case, the effective surface may thus correspond to a theoretical surface which depends on interaction to be experienced by the scan sensor's irradiation with several layers of the layered material.

The position requirement may define points or positions in/on such a radiable surface at which radiations from position sensors are to reflect with the material, and/or target reflections may be correlated to a distance between each of the position sensors and point/position of such a to-be-radiated surface at which radiations from position sensors are to reflect with the material.

The position sensors and the scan sensor may be, in some examples, coupled with each other through a coupler in such a manner that, in use, the scan sensor irradiates the material at irradiated position (or region or point) and the position sensors radiate the material at respective radiated positions (or regions or points) around the irradiated position or region or point. For example, the position sensors and the scan sensor may be coupled with each other in such a manner that the position sensors radiate points/regions of the material forming a triangle (or another polygon) and the scan sensor irradiate a central point/region in the triangle (or other polygon) on the material to be inspected. This arrangement or coupling between position and scan sensors permits operating them in cooperative manner to efficiently and accurately position the scan sensor according to its positional requirement.

In examples, multi-object methods may be provided of contactless detecting a physical feature in multiple instances or objects of said material. Such multi-object methods or multi-object detector methods may comprise performing, for each of the instances or objects of said material, any of the (single-object) detector methods disclosed herein to contactless detect the physical feature in each of the multiple instances or objects of said material.

In a further aspect, systems are provided for contactless detecting a physical feature of a material through a sensor head and a positioner thereof, the sensor head including at least three position sensors and a scan sensor coupled with each other, the scan sensor having a position requirement relative to the material correlated with a target reflection associated to each of the position sensors. Such systems (also denominated detector systems herein) comprise the sensor head, the positioner of the sensor head, a scan sensor operator, a position sensors operator, a positioner operator, a positioning looper, an optimizing looper and a feature determiner. Detector systems are configured to perform, through the positioning looper, a positioning loop with positioning iterations to cause the scan sensor to converge to satisfaction of the position requirement, to verify satisfaction or dissatisfaction of the position requirement and, in case of dissatisfaction, to perform an optimizing loop with optimizing iterations, through the optimizing looper, until an interaction property results optimized corresponding to satisfaction of the position requirement and, once the position requirement is (or has been) satisfied, to operate the scan sensor, through the scan sensor operator, to irradiate the material and first sense interaction of said irradiation with the material and detecting, through the feature determiner, the physical feature depending on said first sensed interaction.

Each of the positioning iterations (performed by the positioning looper) includes operating, through the position sensors operator, each of the position sensors to radiate the material and first sense reflection of said radiation with the material and determining consistency or inconsistency between said first sensed reflection and its associated target reflection and, in case of consistency, quitting the positioning loop and, in case of inconsistency, operating the positioner of the sensor head, through the positioner operator, depending on the determined inconsistency to start new iteration of the positioning loop with the sensor head repositioned.

Each of the optimizing iterations (performed by the optimizing looper) includes operating, through the scan sensor operator, the scan sensor to irradiate the material and second sense interaction of said irradiation with the material, obtaining the interaction property from said second sensed interaction and determining whether said interaction property is optimized or non-optimized and, if non-optimized, operating the positioner of the sensor head, through the positioner operator, depending on said interaction property to start new iteration of the optimizing loop with the sensor head repositioned and, if optimized, quitting the optimizing loop, operating each of the position sensors, through the position sensors operator, to radiate the material and second sense reflection of said radiation with the material and designating said second sensed reflections as the target reflections or, alternatively, recalculating the target reflections depending on said second sensed reflections and historical first and/or second sensed reflections from previous executions of the method.

Since detector systems are suitable to or configured to perform detector methods, functional and advantageous aspects or principles commented with respect to detector methods may be similarly attributable to detector systems.

In a still further aspect, computer programs are provided comprising program instructions for causing a system or computing system to perform methods of contactless detecting a physical feature of a material, such as those described in other parts of the disclosure. These computer programs (also denominated detector computer programs herein) may be embodied on a storage medium and/or carried on a carrier signal.

Since detector computer programs are suitable to or configured to perform detector methods, functional and advantageous aspects or principles commented with respect to detector methods may be similarly attributable to detector computer programs.

In a yet further aspect, computing systems are provided for contactless detecting a physical feature of a material, said computing systems (also denominated detector computing systems herein) comprising a memory and a processor, embodying instructions stored in the memory and executable by the processor, and the instructions comprising functionality or functionalities to execute methods of contactless detecting a physical feature of a material, such as those described in other parts of the disclosure.

Since detector computing systems are suitable to or configured to perform detector methods, functional and advantageous aspects or principles commented with respect to detector methods may be similarly attributable to detector computing systems.

### BRIEF DESCRIPTION OF THE DRAWINGS

Non-limiting examples of the disclosure will be described in the following, with reference to the appended drawings, in which:
Figure 1 is a block diagram schematically illustrating contactless detectors for contactless detecting a physical feature of a material according to examples.
Figure 2 is a flow chart schematically illustrating methods of contactless detecting a physical feature of a material according to examples.
Figure 3 is a flow chart schematically illustrating methods of contactless detecting a physical feature of a material according to other examples.
Figures 4A - 4E are schematic illustrations of what are denominated herein as position requirement, effective surface and incidence material surface.

### DETAILED DESCRIPTION OF EXAMPLES

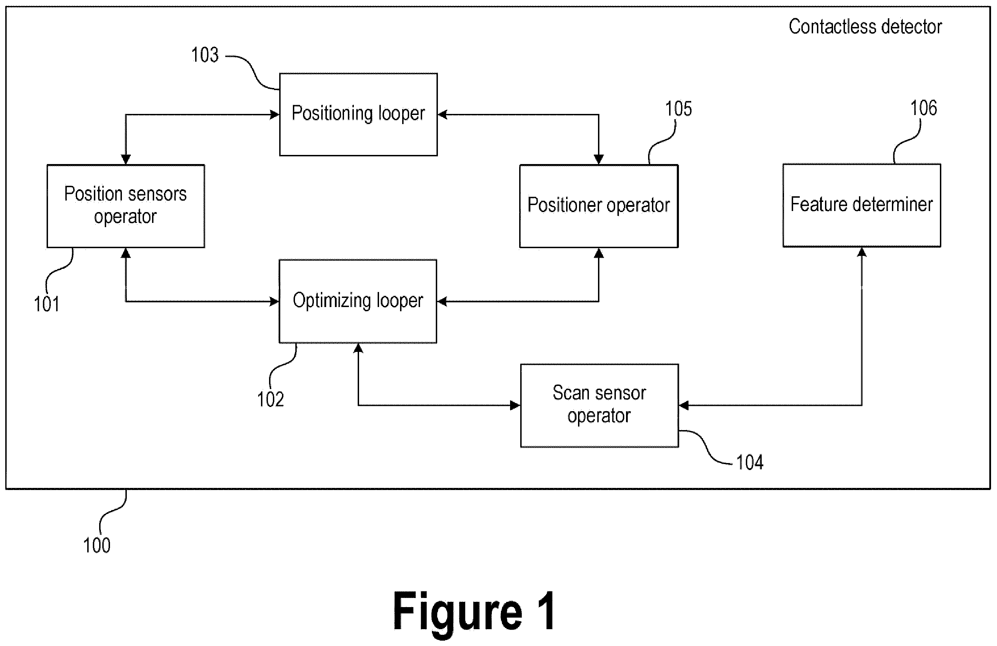

Figure 1 is a block diagram schematically illustrating contactless detectors 100 for contactless detecting a physical feature of a material according to examples. As generally shown in the figure, contactless detectors 100 may include the following modules or units: at least three position sensors (not shown) and pertinent position sensors operator 101, an optimizing looper 102, a positioning looper 103, a scan sensor (not shown) and corresponding scan sensor operator 104, a positioner of the sensor head (not shown) and associated positioner operator 105 and a feature determiner 106. The position sensors and the scan sensor are coupled with each other in a sensor head (not shown). The scan sensor may have a position or positional requirement relative to the material correlated with a target reflection associated to each of the position sensors.

The scan sensor may be, e.g., a Terahertz-based scan sensor, a photothermal-based scan sensor, a ultrasound-based scan sensor, etc. The position sensors may be, e.g., laser-based sensors, ultrasound-base sensors, etc.

The position sensors operator 101 may be configured to perform a positioning function including operating the at least three position sensors to cause each to emit an irradiation (e.g. laser-based irradiation) and to sense, for each of said irradiations, a reflection of the (e.g. laser-based) irradiation with the material, thereby obtaining a sensed (e.g. laser-based) reflection for each of the position sensors. The scan sensor operator 104 may be configured to perform a scanning function including operating the scan sensor to cause it to emit a radiation (e.g., Terahertz-based radiation) and to sense an interaction of the radiation with the material, thereby obtaining a sensed (e.g., Terahertz-based) interaction.

The aforementioned coupling between the position sensors and the scan sensor may be implemented through a coupler in such a manner that, in use, the scan sensor irradiates the material at irradiated position or region or point and the position sensors radiate the material at respective radiated positions or regions or points around the irradiated position or region or point.

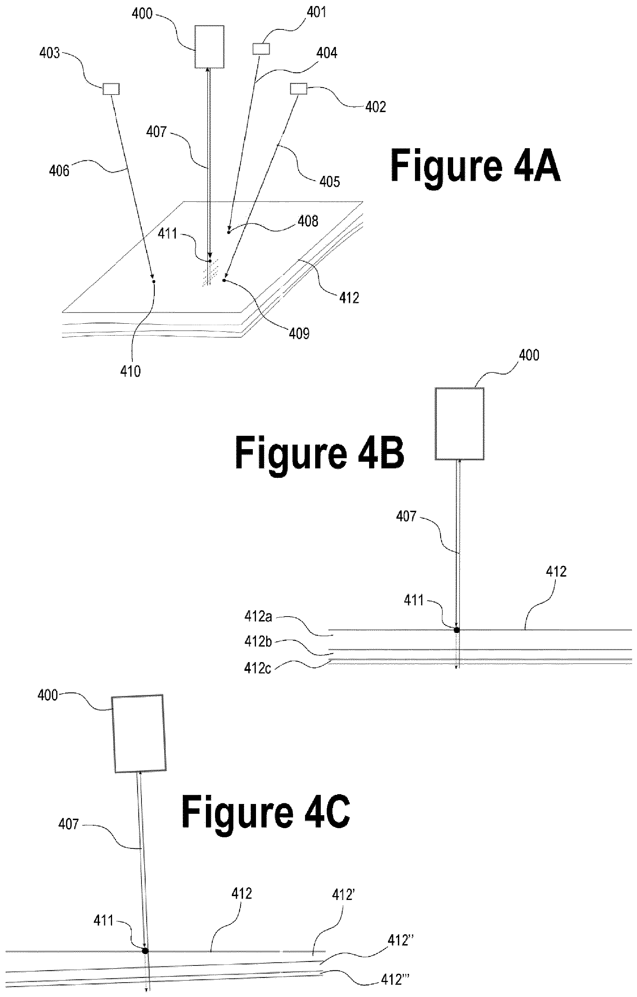

The positional requirement of the scan sensor may be predefined in terms of, e.g., a required predefined distance and/or irradiation incidence angle (or inclination) with respect to an effective surface or to a target region or point on said effective surface of the material to be inspected. What is denominated effective surface herein will be described in detail with reference to Figures 4A - 4E. In examples, the position requirement of the scan sensor may be predefined in terms of a required predefined distance and/or irradiation incidence angle (or inclination) with respect to an outer layer of the material or to outer and inner layers of the material.

The positioning looper 103 may be configured to perform a positioning loop (with iterations) to cause the scan sensor to converge to satisfaction of its position requirement. The positioning loop may be quitted by the positioning looper 103 upon fulfilment of an end-loop condition with either satisfaction or dissatisfaction of the position requirement. Such an end-loop condition may include, for example, reaching a maximum number of iterations of the positioning loop or a maximum iterating time elapsed. In other words, the positioning looper 103 may iteratively attempt to position the sensor head and, in particular, the scan sensor to achieve satisfaction of its positional requirement with respect to the material to be inspected, but limited to a maximum number of iterations or a maximum iterating time elapsed.

The positioning looper 103 may be configured to perform each of the iterations of the positioning loop including performing the positioning function through the position sensors operator 101 and determining consistency (or correspondence) or inconsistency (or non-correspondence) between each of the sensed reflections (from said performing of the positioning function) and its associated target reflection. Consistency or correspondence between each the sensed reflections and its related target reflection may be denominated "favourable consistency" herein which means that the positional requirement of the sensor head is fulfilled and, hence, it is well positioned with respect to the material. Inconsistency or non-correspondence between at least one of the sensed reflections and its related target reflection may be denominated "unfavourable inconsistency" herein which means that the positional requirement of the sensor head is not fulfilled and, therefore, it is bad positioned with respect to the material. How consistency or inconsistency between the sensed and target reflections may be determined is explained in other parts of the disclosure based on, e.g., absolute or non-absolute one-to-one equality.

While the positioning looper 103 does not quit the positioning loop but unfavourable inconsistency (i.e. bad positioning of the sensor head) is determined, the positioner of the sensor head may be operated, through the positioner operator 105, depending on the inconsistency or inconsistencies determined in present iteration, in order to start a new iteration of the positioning loop with the sensor head repositioned. If the positioning looper 103 has quitted the positioning loop with unfavourable inconsistency (i.e. bad positioning of the sensor head), it is considered that proper positioning of the sensor through the positioning sensors is not possible and, therefore, control of the method may be transferred to the optimizing looper 102. If the positioning looper 103 has quitted the positioning loop with favourable consistency (i.e. valid positioning of the sensor head), it is considered that proper positioning of the sensor through the positioning sensors has been achieved and, therefore, control of the method may be transferred to the feature determiner 106.

The above determination of whether the positioning loop has been terminated (by the positioning looper 103) with satisfaction or dissatisfaction of the position requirement may be denominated termination functionality herein.

The correlation between the positional requirement and the target reflections may be such that consistency or correspondence between each of the reflections sensed by each of the position sensors and its associated target reflection corresponds to satisfaction of the position requirement.

The optimizing looper 102 may be configured to perform an optimizing loop (with iterations) to optimize an interaction property, thereby obtaining an optimized interaction property corresponding to satisfaction of the positional requirement of the scan sensor. The optimizing loop may be based on an iterative optimization method aimed at finding a position of the sensor head that optimizes an objective function representing evolution of the interaction property depending on (re-)positioning of the sensor head. Such an optimization method may be based on any known optimization approach such as, e.g., trying all possible sensor head's positions to select the one maximizing the interaction property, gradient calculation starting from an initial value or values of the interaction property, genetic algorithm, least squares method, etc.

The optimizing looper 102 may be configured in such a manner that each iteration of the optimizing loop includes performing the scanning function through the scan sensor operator 104, obtaining the interaction property from the interaction sensed in said performing of the scanning function, and determining whether said interaction property is optimized or non-optimized. If the interaction property is determined non-optimized, the positioner of the measuring head may be operated depending on said interaction property obtained in present iteration to start new iteration of the optimizing loop with the sensor head repositioned. If the interaction property is determined optimized, the optimizing looper 102 may quit the optimizing loop. Upon termination of the optimizing loop, the positioning function may be performed through the position sensors operator 101 and each of the reflections sensed in said performing of the positioning function may be used to designate (new) target reflection to be considered in next performing of the detector method. Such (new) target reflections may be determined further depending on historical sensed reflections from previous executions of the method, as described in other parts of the disclosure. This update of the target reflections may be denominated updating functionality herein.

If the positional requirement has been fulfilled by using only the position sensors, said updating functionality may be performed (to maximize accuracy of the target reflections) or may not be performed (because sensed and target reflections have been determined consistent to each other).

The updating functionality may include designating reflections sensed under satisfaction of the position requirement as (new) target reflections. Alternatively, the updating functionality may include using not only the current sensed reflections (under satisfaction of the position requirement) but also sensed reflections from previous executions of the method.

The interaction property may be obtained from the interaction sensed in the performing of the scanning function in same iteration of the optimizing loop based on, e.g. time domain processing and/or frequency domain processing of the sensed interaction. Such an interaction property may be or may include any one of the time domain and/or frequency domain processing parameters of the sensed interaction cited in other parts of the disclosure.

The feature determiner 106 may be configured to detect, once valid positioning of the scan sensor has been determined, the feature of the material by performing, through the scan sensor operator 104, the scanning function and to determine the feature of the material depending on the interaction sensed in said performing of the scanning function. Said interaction may be a reflection-based and/or transmission-based interaction.

The material to be inspected may be structured as a layered material with one or several layers, and the physical feature to be detected may be thickness of one or more layers in the layered structure, electrical parameters (such as complex refractive index, conductance and resistance), or other physical features attributable to a material such as, e.g., defects, voids, discontinuities, hardness, adherence etc.

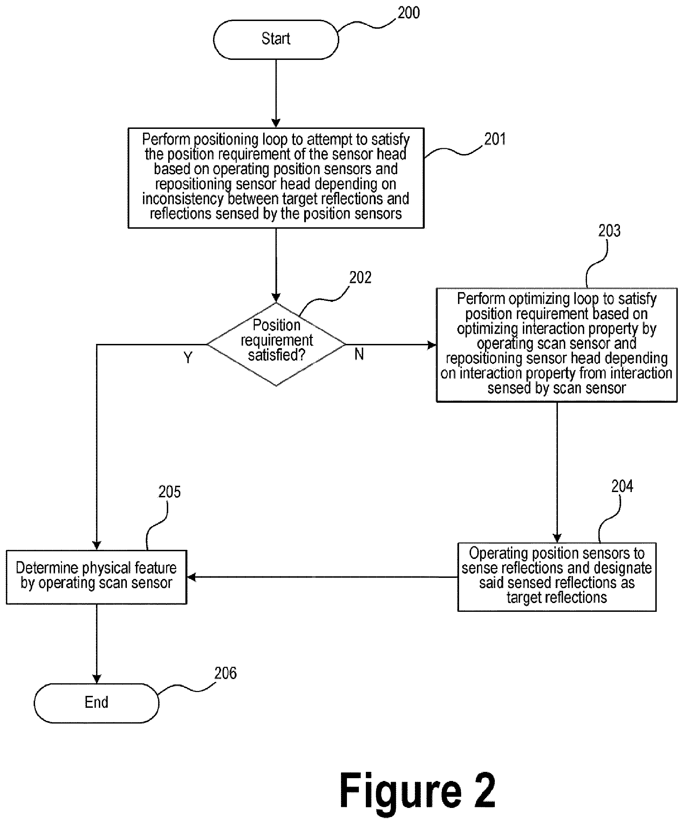

Figure 2 is a flow chart schematically illustrating methods of contactless detecting a physical feature of a material according to examples. As generally shown in the figure, detector methods may be initiated (e.g., at block 200) upon detection of a starting condition such as, e.g., a user request to start the detector method. Since detector methods according to Figure 2 are performable by detector systems according to Figure 1, number references from said Figure 1 may be reused in following description of Figure 2.

Detector methods may further include (e.g., at method block 201) performing a positioning loop in same or similar manner as described with reference to Figure 1. This positioning functionality implemented or implementable at method block 201 may be performed by, e.g., the positioning looper 103 in cooperation with position sensors operator 101 and positioner operator 105 as previously described with reference to Figure 1. Functional details and considerations explained about said modules 101, 103, 105 may thus be similarly attributed or attributable to method block 201.

Detector methods may further include (e.g., at method block 202) determining whether the positioning loop has been quitted (at, e.g., previous block 201) with satisfaction or dissatisfaction of the positional requirement of the sensor head, and transitioning to method block 203 upon dissatisfaction N or to method block 205 upon satisfaction Y. This function implemented or implementable at method block 202 may be equal or similar to the termination functionality previously described with reference to Figure 1. Therefore, functional details and considerations explained about said termination functionality with reference to Figure 1 may thus be similarly attributed or attributable to method block 202.

Detector methods may further include (e.g., at method block 203) performing an optimizing loop in same or similar manner as described with reference to Figure 1. This optimizing functionality implemented or implementable at method block 203 may be performed by, e.g., the optimizing looper 102 in cooperation with scan sensor operator 104 and positioner operator 105 as previously described with reference to Figure 1. Functional details and considerations explained about said modules 102, 104, 105 may thus be similarly attributed or attributable to method block 203.

Detector methods may further include (e.g., at method block 204) operating the position sensors to sense reflections and designate said sensed reflections as (new) target reflections. Such (new) target reflections may be determined further depending on historical sensed reflections from previous executions of the method, as described in other parts of the disclosure. This function implemented or implementable at method block 204 may be equal or similar to the updating functionality previously described with reference to Figure 1. Therefore, functional details and considerations explained about said updating functionality with reference to Figure 1 may thus be similarly attributed or attributable to method block 204.

Detector methods may further include (e.g., at method block 205) operating the scan sensor to obtain sensed interaction and determining the physical feature depending on said sensed interaction in same or similar manner as described with reference to Figure 1. This determining functionality implemented or implementable at method block 205 may be performed by, e.g., the feature determiner 106 previously described with reference to Figure 1. Functional details and considerations explained about said module 106 may thus be similarly attributed or attributable to method block 205.

Once the physical feature of the material has been determined, transition from block 205 to ending block 206 may be performed to terminate execution of the detector method.

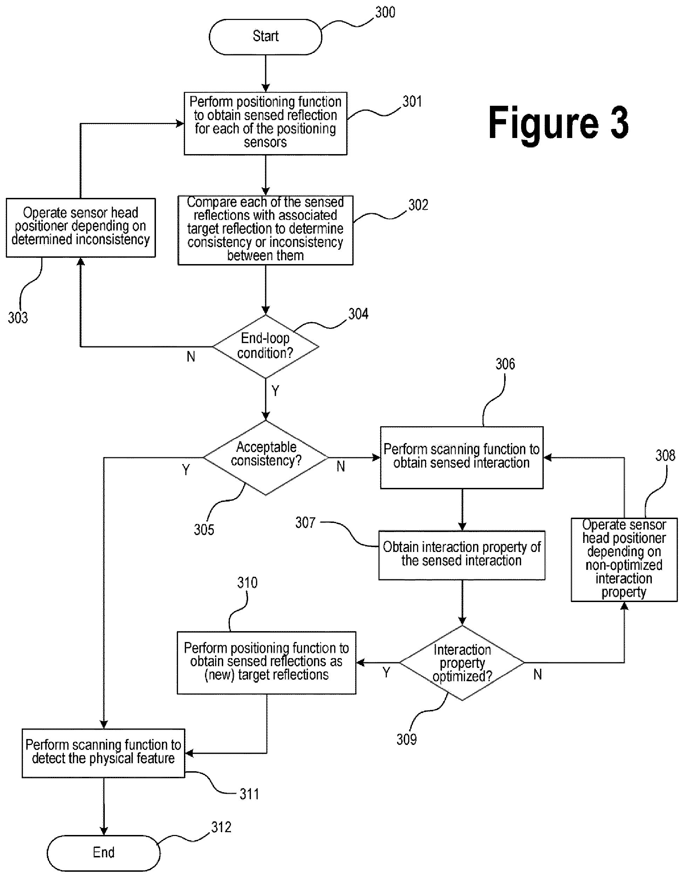

Figure 3 is a flow chart schematically illustrating methods of contactless detecting a physical feature of a material according to examples. As generally shown in the figure, detector methods may be initiated (e.g., at block 300) upon detection of a starting condition such as, e.g., a user request to start the detector method. Since detector methods according to Figure 3 are performable by detector systems according to Figure 1 and may correspond to particular implementations of detector methods according to Figure 2, number references from said Figures 1 and 2 may be reused in following description of Figure 3.

Method blocks 301 - 304 of Figure 3 may correspond to particular implementations of method block 201 of Figure 2. Said blocks 301 - 304 may implement the performing of the positioning loop in same or similar manner as described with reference to method block 201 of Figure 2. Positioning loop according to Figure 3 may include performing positioning function to obtain sensed reflection for each of the positioning sensors (block 301) and comparing each of said sensed reflections with its associated target reflection to determine consistency or inconsistency between sensed and target reflections (block 302). Positioning loop according to Figure 3 may further include determining if end-loop condition is fulfilled (block 304), in which case Y the positioning loop may be quitted to transition to block 305 and, otherwise N, sensor head positioner may be operated depending on determined inconsistency (block 303) to start new iteration of the positioning loop with the sensor head repositioned. Functional details and considerations relative to method block 201 of Figure 2 may thus be similarly attributed or attributable to method blocks 301 - 304 of Figure 3.

Method block 305 of Figure 3 may correspond to particular implementation of method block 202 of Figure 2. Said block 305 may implement the verifying of whether the position requirement is satisfied (block 202 of Figure 2) by determining whether acceptable or favourable consistency between sensed and target reflections has been achieved (block 305 of Figure 3), in which case Y, detector method may transition to block 311 and, otherwise N, detector method may transition to block 306. Functional details and considerations relative to method block 202 of Figure 2 may thus be similarly attributed or attributable to method block 305 of Figure 3.

Method blocks 306 - 309 of Figure 3 may correspond to particular implementations of method block 203 of Figure 2. Said blocks 306 - 309 may implement the performing of the optimizing loop in same or similar manner as described with reference to method block 203 of Figure 2. Optimizing loop according to Figure 3 may include performing scanning function to obtain sensed interaction (block 306) and obtaining interaction property from said sensed interaction (block 307). Optimizing loop according to Figure 3 may further include determining if interaction property has been optimized (block 309), in which case Y the optimizing loop may be quitted to transition to block 310 and, otherwise N, sensor head positioner may be operated depending on non-optimized interaction property (block 308) to start new iteration of the optimizing loop with the sensor head repositioned. Functional details and considerations relative to method block 203 of Figure 2 may thus be similarly attributed or attributable to method blocks 306 - 309 of Figure 3.

Method block 310 of Figure 3 may correspond to particular implementation of method block 204 of Figure 2. Said block 310 may perform positioning function to obtain sensed reflections and designating them as (new) target reflections which corresponds to the updating functionality implemented by block 204 of Figure 2. Such (new) target reflections may be determined further depending on historical sensed reflections from previous executions of the method, as described in other parts of the disclosure. Functional details and considerations relative to method block 204 of Figure 2 may thus be similarly attributed or attributable to method block 310 of Figure 3.

Method block 311 of Figure 3 may correspond to particular implementation of method block 205 of Figure 2. Said block 311 may operating the scan sensor to obtain sensed interaction and determining the physical feature depending on said sensed interaction in same or similar manner as described with reference to block 205 of Figure 2. Functional details and considerations relative to method block 205 of Figure 2 may thus be similarly attributed or attributable to method block 311 of Figure 3.

Once the physical feature of the material has been determined, transition from block 311 to ending block 312 may be performed to terminate execution of the detector method.

In detector methods such as the ones of Figure 2 and Figure 3, target reflections may be updated (in optimizing loop or just after it in e.g. blocks 204 or 310) not only from reflections sensed by position sensors in present execution of the method, but further depending on reflections sensed in previous executions of the method. This history-based approach may provide even more accuracy in positioning the scan sensor and, therefore, in detection of the physical feature. Such reflections sensed in, e.g., blocks 204 or 310 (or following position requirement satisfaction Y at block 202 or acceptable consistency Y at block 305) of previous executions of the method may be denominated herein as historical sensed reflections. If several points or regions of the material are to be inspected, each of said points or regions may have its own historical sensed reflections.

In Figure 2, method block 204 adapted to above history-based approach may determine (new) target reflections from or depending on currently sensed reflections and, furthermore, on historical sensed reflections accumulated along previous executions of the method. In Figure 3, method block 310 adapted to above history-based approach may similarly determine (new) target reflections from or depending on currently sensed reflections and, furthermore, on historical sensed reflections accumulated along previous executions of the method.

In examples according to what may be denominated massive approach, multi-object inspecting methods, systems and computer programs may be provided for contactless detecting a physical feature of a material in a plurality of instances or objects of this material. Such multi-object inspecting methods may be suitable for a manufacturing or production line where objects of same type are inspected at a detecting or control stage in the manufacturing line. A transport system (e.g., a conveyer) may be used to convey the objects and make them to pass one by one through the detecting or control stage where a detector system configured to perform detector methods according to present disclosure may be arranged. Each of the objects to be inspected may have several points or regions to be inspected, in which case detector system may be configured to move from one to next point/region (of same object) to perform detector method at each of the points/regions to be inspected.

Multi-object inspecting methods may include performing, for each of the objects to be inspected, any one of the detector methods according to present disclosure. Such a detector method may be performed as each one of the objects to be inspected arrives at the detecting or control stage. When arrived, detector method may be performed for each region/point to be inspected of the object to contactless detect the physical feature of the material in each of the regions/points to be inspected of said object.

Detector method in multi-object inspecting method may recalibrate itself (through optimization loop and update of target reflections accordingly) upon different situations. For example, when first object of given type, model or spec is inspected in first execution of detector method with target reflections predefined arbitrarily or deliberately erroneous to cause first execution of the detector method to define accurate particular target reflections for each of the points/regions to be inspected of the object. Another situation may be, e.g., when some of the specs of the object type changes from one to another object affecting the performing of the detector method in/at some of the regions/points to be inspected.

Such a history-based approach may be useful in multi-object inspecting methods such as the ones described in other parts of the disclosure. Artificial Intelligence (AI) techniques may be used in methods according to such a history-based approach to improve update of target reflections and, therefore, the positioning of the scan sensor and the obtaining of measurements or feature detections. More or less weight may be attributed to current and historical sensed reflections depending on different parameters (e.g. their frequency), so speed of adaptation of detector methods may be advantageously modulated.

Detector methods in what may be denominated multi-object inspecting methods (explained in other parts of the disclosure) may enable measuring properly and/or accurately under distorting conditions based on adapting target reflections to production changes and intrinsic variability. Distorting conditions may include, e.g., variation on surface to be radiated by position sensors on particular object instance due to, e.g., intrinsic variability of positioning of whole object (at, e.g., a transport system such as a conveyer), intrinsic variability on the state of object's part to be inspected (e.g. car door opened or closed state in a quality control stage of a car body production line), variability of manufacturing processes (e.g. uniformity or non-uniformity on paint quantity/thickness), etc.

Such distorting conditions may cause unsatisfaction of the position requirement by using only the position sensors (positioning loop). Consequently, detector method may subsequently perform optimization loop to adjust or compensate for distorting condition(s) to thereby fulfil the position requirement even under such distorting condition(s). Historical data may be processed to determine if the position obtained corresponds to an error situation or, otherwise, to a measurable situation in which case feature detection is performed.

Update of target reflections may be avoided if, for example, it is detected that the position obtained corresponds to an error situation due to, e.g., bad positioning (on, e.g., a transport system such as a conveyer) of the object/material to be inspected, erroneous or unexpected state of the object/material to be inspected (e.g., car door unexpectedly too opened), object/material type traceability error (e.g. object/material type conveyed does not correspond to the one expected by or indicated to detector system), etc. In this case of error situation, obtained sensed reflections may be discarded (from historical sensed reflections), and/or error warning may be emitted and/or execution of detector method aborted, in such a manner that detection of the feature is not performed.

If the position obtained corresponds to a measurable situation, the detection of the feature may be performed and currently sensed reflection may be used to update the target reflections and, in examples, kept in historical sensed reflections. Features determined in executions of detector methods may be also kept as historical data in same or similar manner as historical sensed reflections. In this history-based approach, different techniques such as, e.g., Al techniques may be used to, e.g., detect outliers or anormal features determined by detector methods with respect to historical values and to proceed accordingly by, e.g., performing correcting actions. Such correcting actions may include, e.g., repeating the positioning and measuring, forcing execution of the optimizing loop irrespective of whether the positioning loop has terminated with satisfaction of the position requirement, modulating a weight of the data (e.g. sensed reflection, determined feature, etc.) to be saved or kept associated to the particular measurement determined, etc.

Manufacturing line may be, e.g., a vehicle/car manufacturing or production line, objects to be inspected may be vehicles or cars, and the material to be inspected may be paint coating on vehicles or cars. Paint coating may be, e.g., a layered paint coating including several paint coating layers. The feature to be detected may be, e.g., thickness of one or more layers in the layered paint coating, electrical parameter(s) such as complex refractive index, conductance, resistance, etc. or any other physical feature attributable to the layered coating such as hardness, adherence, defects, voids, discontinuities, etc.

Figures 4A - 4E are schematic illustrations of what are denominated herein as position requirement, effective surface and incidence material surface.

Figure 4A shows scan sensor 400 and position sensors 401 - 403 coupled together through a coupler (not shown for reasons of simplicity) in a detector system for detecting a physical feature of a material 412. Scan sensor 400 is configured to irradiate the material 412 at irradiating point 411 and to sense interaction of said irradiation with the material 412. Irradiation emitted by the scan sensor 400 and its interaction with the material 412 received by scan sensor 400 are shown collinear (with each other) and are indicated with same reference number 407. In the particular example illustrated, it is shown a transmission-based interaction but it could be reflection-based. In other examples, irradiation emitted by the scan sensor 400 and its interaction with the material 412 received by scan sensor 400 may not be collinear (with each other) and, therefore, may form an angle depending on, e.g., hardware arrangement in the scan sensor 400.

Position sensor 401 is configured to radiate the material 412 at radiating point 408 and sense its reflection on the material 412. Radiation emitted by position sensor 401 and its reflection on the material 412 received by position sensor 401 are indicated with same reference number 404. Position sensor 402 is configured to radiate the material 412 at radiating point 409 and sense its reflection on the material 412. Radiation emitted by position sensor 402 and its reflection on the material 412 received by position sensor 402 are indicated with same reference number 405. Position sensor 403 is configured to radiate the material 412 at radiating point 410 and sense its reflection on the material 412. Radiation emitted by position sensor 403 and its reflection on the material 412 received by position sensor 403 are indicated with same reference number 406. Radiation emitted and reflection received 404 - 406 are shown collinear for each of the position sensors 401 - 403, but they could form an angle depending on, e.g., hardware arrangement in the position sensors 401 - 403.

Radiating points 408 - 410 may form a triangle or similar polygon around irradiating point 411. With more than three position sensors, other polygons may be formed by corresponding radiating points.

Positional requirement of the scan sensor 400 may include a required predefined distance between scan sensor 400 and incidence point 411 and/or a required predefined incidence angle or inclination of the irradiation emitted by the scan sensor 400 with respect to an effective surface around the incidence point 411. Effective surface refers to a theoretical surface around incidence point 411 relative to which the scan sensor 400 (i.e. the sensor head) is to be positioned according to its positional requirement. In the particular example illustrated, the predefined incidence angle or inclination is shown perpendicular with respect to the effective surface.

Figure 4B and figure 4C schematically represent a cross-sectional view of the material 412 to be inspected. Figure 4B illustrates an example of coincidence between real and effective surface of the material 412 irradiated 407 by scan sensor 400 at incidence point 411. The material is a layered material with several layers 412a - 412c each of which having uniform thickness and composition as shown in the cross-sectional view. It is shown that irradiation 407 emitted by scan sensor 400 is perpendicular to visible or real surface of outermost layer 412a of the material 412 because real and effective surface of the material 412 are coincident. Positional requirement thus includes perpendicular incidence and certain distance between scan sensor 400 and material 412.

Figure 4C illustrates an example of non-coincidence between real and effective surface of the material 412 irradiated 407 by scan sensor 400 at incidence point 411. The material is a layered material with several layers 412' - 412"', with outermost layer 412' having non-uniform thickness as shown in the cross-sectional view and inner layers 412", 412‴ having uniform thickness. In the particular case illustrated, inner layers 412", 412‴ have more prominent influence on the feature to be detected and, therefore, positional requirement includes perpendicular incidence to inner layers 412", 412"', which therefore means non-perpendicular incidence to real or visible surface of outermost layer 412'. That is, real surface and effective surface are not coincident in this case. Execution of the optimizing loop will thus maximize/optimize interaction property in such a manner that the illustrated non-perpendicular incidence to real or visible surface of outer layer 412' will be selected/defined as the positional requirement or part thereof.

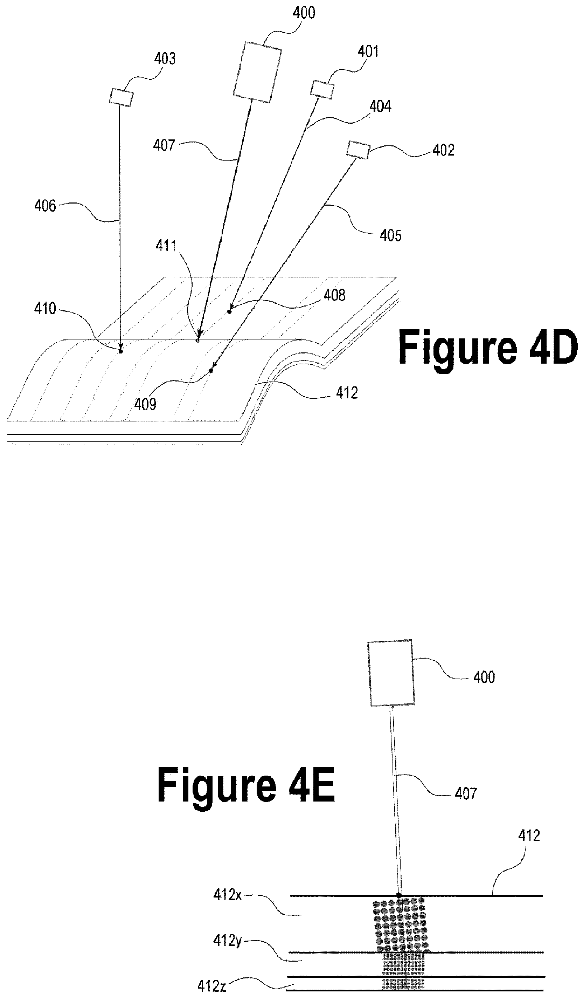

Figure 4E illustrates another example of non-coincidence between real and effective surface of the material 412 irradiated 407 by scan sensor 400 at incidence point 411. The material is a layered material 412 with several layers 412x, 412y, 412z having different compositions. In the particular case illustrated, the outermost layer 412x shows a non-homogeneous distribution of the material which could influence the feature to be detected and, therefore, the positional requirement includes non-perpendicular incidence to visible or real surface of outermost layer 412x. Real surface and effective surface are thus not coincident in this case. Execution of the optimizing loop will thus maximize/optimize interaction property in such a manner that the illustrated non-perpendicular incidence to real or visible surface of outer layer 412x will be selected/defined as the positional requirement or part thereof due to non-homogeneous material distribution in layer 412x.

Figure 4D illustrates a scenario similar to the one of Figure 4A but with material 412 having curved outermost or visible surface. Considering that in both Figures 4A and 4D the effective surface coincides with the real surface and that incidence angle or inclination should be ideally perpendicular with respect to said surface, the fact that the real surface in Figure 4D around incidence point 411 is curved implies that the scan sensor 400 (and also position sensors 401 - 403 with fixed position relative to scan sensor 400) needs to be inclined in comparison to Figure 4A to satisfy the positional requirement.

The position of the sensor head (coupling scan sensor 400 and position sensors 401 - 403 together) to be reached with respect to incidence point 411 satisfying the positional requirement defines the radiations 404 - 406 emitted by position sensors 401 - 403. Points 408 - 410 at which radiations 404 - 406 from position sensors 401 - 403 are reflected with the material 412 and point 411 at which irradiation 407 from scan sensor 400 interacts with the material 412 under satisfaction of the position requirement define together what is denominated herein as incidence material surface.

Figure 4A and Figure 4D show different incidence material surfaces. In Figure 4A the four incidence points 408 - 411 defining the incidence material surface are in same plane, which is not the case in Figure 4D. Distances between position sensors 401 - 403 and incidence points 408 - 410 associated thereto determine the reflections sensed by position sensors 401 - 403 and, hence, the target reflections to be considered. Therefore, target reflections used to attempt to correctly position the scan sensor 400 by operating only the position sensors 401 - 403 may be (pre)defined depending on said incidence material surface formed by incidence points 408 - 411. Each pair of sensed reflection and its associated target reflection corresponds to a pair of values whose consistency with each other indicates satisfaction of the position requirement, said pair of values being correlated with measured distance between corresponding position sensor and intended incidence point on the incidence material surface.

Calibration step may be preliminary performed as explained in other parts of the description to obtain initial target reflections to be used in first execution of detector method. Since incidence material surfaces 408 - 411 correlated with the fulfillment of the positional requirement in the scenarios of Figure 4A and Figure 4D are different, target reflections will also be different.

In first execution of detector method, positioning loop is performed to position the scan sensor 400 to properly irradiate incidence point 411 respectively in Figure 4A and in Figure 4D. Positioning loop attempts to satisfy the position requirement of the scan sensor 400 by using only position sensors 401 - 403. In first iteration of positioning loop, only required distance between scan sensor 400 and incidence point 411 may be ensured, but orientation of the scan sensor 400 with respect to the material 412 may not be the one satisfying consistency or correspondence between sensed reflections and target reflections. Hence, positioning loop may attempt to reposition the sensor head by preserving distance to incidence point 411 and operating the positioner of the sensor head by, e.g., performing rotation(s) to find the position satisfying consistency between sensed reflections and target reflections or, in other words, required distance between each of the position sensors 401 - 403 and corresponding incidence point 408 - 410.

Some repositioning attempts (i.e. positioning loop iterations) may be carried out until maximum number of iterations has been performed or maximum iterating time has elapsed and consistency between sensed reflections and target reflections has not been achieved. In this case, detector method may transition to optimizing loop to properly position the scan sensor 400 and determine new target reflections (associated to position sensors 401 - 403) based on operating the scan sensor 400 itself.

Detector methods have been shown to be effective to accurately position the scan sensor 400 by using either position sensors 401 - 403 only (positioning loop) and/or scan sensor 400 itself (optimizing loop) taking into account material surfaces with respect to which positioning of the scan sensor 400 is difficult to achieve such as, e.g., curved material surfaces.

When consistency between sensed reflections and target reflections is not achieved and, hence, scan sensor 400 is assumed as not positionable based on only position sensors 401 - 403, optimization loop may be performed to correctly position the scan sensor 400 based on itself. In a detector method execution in a scenario according to Figure 4D (curved material surface) after previous execution in a scenario according to Figure 4A (flat material surface), it may result impossible to satisfy consistency between sensed reflections and target reflections because material surface has changed from flat to (slightly) curved. This surface "distortion" from one to next execution may be overcome by executing optimizing loop to properly position scan sensor 400 and, in turn, adjust target reflections according to new scenario. This manner, detector method is recalibrated by itself in such a way that if said surface distortion (curved surface) remains in following objects to be inspected, scan sensor 400 will be correctly positioned by using only position sensors 401 - 403 (positioning loop).

Another distortion could be a displacement of the incidence point 411 from one object to be inspected to next one. This distortion may be due to, e.g., an erroneous stopping of the object to be inspected at, e.g., control or measuring stage. Taking into account the scenarios according to Figure 4A and Figure 4D, such a displacement could be aggravated by transition from flat to curved surface. Under these circumstances, it is thus possible that positioning loop terminates without satisfaction of the positional requirement of the scan sensor 400. Once again, optimizing loop may be performed to properly position scan sensor 400 and, in turn, adjust target reflections according to new scenario, such that detector method is recalibrated by itself, as explained in other parts of the description.

Above situations, i.e. error situation and measurable situation, may be better handled with support of historical data (historical features, historical sensed reflections, etc.) to take into account many more data and accordingly obtain more accurate new results, as explained in other parts of the disclosure.

The position sensors 401 - 403 and the scan sensor 400 may be coupled with each other through a coupler (not shown) in such a manner that, in use, the scan sensor 400 irradiates the material 412 at irradiated point 411 and the position sensors 401 - 403 radiate the material 412 at respective radiated points 408 - 410 around the irradiated point 411. For example, the position sensors 401 - 403 and the scan sensor 400 may be coupled with each other in such a manner that the position sensors 401 - 403 radiate points 408 - 410 of the material 12 forming a triangle (or another polygon) and the scan sensor 400 irradiate central point 411 in the triangle (or other polygon) on the material 12 to be inspected. This relative arrangement or coupling between position sensors 401 - 403 and scan sensor 400 permits operating them in cooperative manner to efficiently and accurately position the scan sensor 400 according to its positional requirement, even in complex scenarios such as the ones described with reference to Figures 4A and 4D.

It is desirable that distance between sensor head (i.e., scan sensor 400 and position sensors 401 - 403) and material 412 is close enough to ensure that radiations from position sensors 401 - 403 and irradiation from scan sensor 400 are intense enough to perform accurately, since radiation/irradiation's intensity decreases with distance. In turn, it is required that sensor head is positioned not excessively close to the material 412 in order to minimize risk of collision therewith when, e.g., operating/rotating the positioner to (re)position the sensor head. Such a distance included in the position requirement of the scan sensor 400 may be accurately predefined experimentally and/or theoretically.

Similarly, it is also recommendable that incidence points 408 - 411 are distanced enough from each other since, otherwise, information provided by them may not be valuable enough to accurately position the sensor head. Incidence points 408 - 411 very close to each other (e.g., converging to single incidence point) may minimize measuring drawbacks due to curved surfaces but, in turn, they may form an area excessively small and thus provide useless positioning information. Any kind of measurement typically has an intrinsic error or background noise and, therefore, if incidence points 408 - 411 are too close to each other, information provided by each one may be more similar in relation to level of noise or error. It is thus less effective information that makes accuracy of positioning (e.g., triangulation) methods worse.

In turn, it is convenient that incidence points 408 - 411 are not excessively distanced from each other since they define together minimum area over which the sensor head is to be positioned. For example, when material is to be inspected on a small area surface (e.g., an edge), available material surface may be very limited. Therefore, corresponding tech specs may be predefined to cause incidence points 408 - 411 to fit in any potential material surface depending on aimed application. Such specs to ensure most suitable distribution of incidence points 408 - 411 may be predefined experimentally and/or theoretically.

Alternatively, the position sensors 401 - 403 and the scan sensor 400 may be coupled with each other through a coupler (not shown) in such a manner that the radiated points 408 - 410 are not around the irradiated point 411 but, otherwise, the irradiated point 411 falls outside or separated from polygon formed by radiated points 408 - 410. However, this arrangement may be less efficient since it may require (re)positioning the coupler (i.e. sensor head) several times over (or pointing to) the point or position of the target surface of the material. In the best-case scenario of not needing the execution of the optimizing loop, the coupler is firstly positioned to perform the positioning loop (ensure satisfaction of the position requirement based on the position sensors) and subsequently (re)positioned to operate the scan sensor to irradiate the material and sense its interaction. Besides this time inefficiency, the sensor head is typically less compact and, consequently, in order to minimize collision risk, distance between sensor head (i.e. scan sensor 400 and position sensors 401 - 403) and material could require to be increased, thereby causing or worsening the aforementioned negative effects.

As used herein, the term "module" or "unit" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding contactless detectors for contactless detecting a physical feature of a material proposed herein, and/or to other components that may be local or remote to one another. Additionally, the modules may be moved from one device and added to another device, and/or may be included in both devices, associated to corresponding contactless detectors proposed herein. Any software implementations may be tangibly embodied in one or more storage media, such as e.g. a memory device, a floppy disk, a compact disk (CD), a digital versatile disk (DVD), or other devices that may store computer code.

Contactless detectors for contactless detecting a physical feature of a material according to present disclosure may be implemented by computing means, electronic means or a combination thereof. The computing means may be a set of instructions (e.g. a computer program) and then contactless detectors may comprise a memory and a processor, embodying said set of instructions stored in the memory and executable by the processor. These instructions may comprise functionality or functionalities to execute corresponding methods of contactless detecting a physical feature of a material such as e.g. the ones described with reference to some figures.

In case the contactless detectors for contactless detecting a physical feature of a material are implemented only by electronic means, a controller of the system may be, for example, a CPLD (Complex Programmable Logic Device), an FPGA (Field Programmable Gate Array) or an ASIC (Application-Specific Integrated Circuit).

In case the contactless detectors are a combination of electronic and computing means, the computing means may be a set of instructions (e.g. a computer program) and the electronic means may be any electronic circuit capable of implementing corresponding steps of the detector methods (of contactless detecting a physical feature of a material) proposed herein, such as those described with reference to other figures.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing contactless methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is(are) embodied in a signal that may be conveyed directly by a cable or other device or means, the carrier may be constituted by such a cable or other device or means. Alternatively, the carrier may be an integrated circuit in which the computer program(s) is(are) embedded, the integrated circuit being adapted for performing, or for use in the performance of, detector methods proposed herein.

Although only a number of examples have been disclosed herein, other alternatives, modifications, uses and/or equivalents thereof are possible. Thus, the scope of the disclosure should not be limited by particular examples, but it should be determined only by the claims that follow.

## Claims

1. Method of contactless detecting a physical feature of a material through a sensor head and a positioner thereof, the sensor head including at least three position sensors (401-403) and a scan sensor (400) coupled with each other, the scan sensor (400) having a position requirement relative to the material correlated with a target reflection associated to each of the position sensors (401-403), the method comprising:
performing (201) a positioning loop with positioning iterations to cause the scan sensor (400) to converge to satisfaction of the position requirement, verifying (202, 305) satisfaction or dissatisfaction of the position requirement and, in case of dissatisfaction, performing (203) an optimizing loop with optimizing iterations until an interaction property results optimized corresponding to satisfaction of the position requirement; and
once the position requirement is satisfied, operating the scan sensor (400) to irradiate the material and to first sense interaction of said irradiation with the material and detecting (205, 311) the physical feature depending on said first sensed interaction; wherein
each of the positioning iterations includes operating (301) each of the position sensors (401-403) to radiate the material and to first sense reflection of said radiation with the material and determining (302) consistency or inconsistency between said first sensed reflection and its associated target reflection and, in case of consistency (304), quitting the positioning loop and, in case of inconsistency, operating (303) the positioner depending on the determined inconsistency to start new iteration of the positioning loop with the sensor head repositioned; and wherein
each of the optimizing iterations includes operating (306) the scan sensor (400) to irradiate the material and to second sense interaction of said irradiation with the material, obtaining (307) the interaction property from said second sensed interaction and determining (309) whether said interaction property is optimized or non-optimized and, if non-optimized, operating (308) the positioner depending on said interaction property to start new iteration of the optimizing loop with the sensor head repositioned and, if optimized, quitting the optimizing loop, operating (204, 310) each of the position sensors (401-403) to radiate the material and to second sense reflection of said radiation with the material and updating the target reflections depending on said second sensed reflections.

2. Method of contactless detecting a physical feature of a material according to claim 1, wherein the updating of the target reflections depending on said second sensed reflections includes designating said second sensed reflections as the target reflections.

3. Method of contactless detecting a physical feature of a material according to any of claims 1 or 2, wherein the updating of the target reflections depending on said second sensed reflections includes updating the target reflections further depending on first sensed reflections and/or second sensed reflections from previous executions of the method.

4. Method of contactless detecting a physical feature of a material according to any of claims 1 to 3, wherein the position requirement of the scan sensor (400) is predefined based on a required predefined distance between the scan sensor (400) and a point or position of a target surface of the material where the irradiation from the scan sensor (400) is to interact with, and/or on a required predefined incidence angle or inclination of the irradiation from the scan sensor (400) with said point or position of the target surface.

5. Method of contactless detecting a physical feature of a material according to claim 4, wherein the target surface of the material is an effective surface of the material.

6. Method of contactless detecting a physical feature of a material according to claim 5, wherein the material is a layered material and the effective surface of the material corresponds to a theoretical surface which depends on the interaction to be experienced by the irradiation from the scan sensor (400) with several layers of the layered material.

7. Method of contactless detecting a physical feature of a material according to any of claims 1 to 6, wherein the position requirement of the scan sensor (400) relative to the material is predefined correlated with each of the target reflections in such a manner that consistency or correspondence between each of the first sensed reflections and its associated target reflection corresponds to satisfaction of the position requirement.

8. Method of contactless detecting a physical feature of a material according to any of claims 1 to 7, wherein consistency or correspondence between each of the first sensed reflections and its associated target reflection is determined based on absolute or non-absolute equality between each of the first sensed reflections and its associated target reflection and/or depending on a distance function between each of the first sensed reflections and its associated target reflection; wherein the non-absolute equality corresponds to equality plus/minus an acceptable error or tolerance.

9. Method of contactless detecting a physical feature of a material according to any of claims 1 to 8, wherein each of the first sensed interactions includes or is a sensed reflection-based interaction and/or sensed transmission-based interaction.

10. Method of contactless detecting a physical feature of a material according to any of claims 1 to 9, wherein the material has a layered structure including one or more layers and the physical feature to be detected is a property of the layered structure.

11. Method of contactless detecting a physical feature of a material according to claim 10, wherein the physical feature to be detected includes either
a thickness of at least one layer in the layered structure; or
an electrical property of at least one layer in the layered structure, said electrical property being or including a complex refractive index, a conductance, a resistance, or any combination thereof; or
a non-electrical property of at least one layer in the layered structure, said non-electrical property being or including a hardness, an adherence, a formation defect, a formation void, a formation discontinuity, or any combination thereof.

12. Method of contactless detecting a physical feature of a material according to any of claims 1 to 11, wherein the optimizing loop is based on an optimization method aimed at finding a position of the sensor head that optimizes an objective function representing evolution of the interaction property depending on positioning of the sensor head.

13. Method of contactless detecting a physical feature of a material according to claim 12, wherein the optimization method is based on trying all possible sensor head's positions to select the one maximizing the interaction property, or based on gradient calculation starting from an initial value or values of the interaction property, or based on a genetic algorithm, or based on a least squares method.

14. Multi-object method of contactless detecting a physical feature in multiple instances or objects of said material, the multi-object method comprising performing, for each of the instances or objects of said material, a method according to any of claims 1 to 13 to contactless detect the physical feature in each of the multiple instances or objects of said material.

15. System (100) for contactless detecting a physical feature of a material through a sensor head and a positioner thereof, the sensor head including at least three position sensors (401-403) and a scan sensor (400) coupled with each other, the scan sensor (400) having a position requirement relative to the material correlated with a target reflection associated to each of the position sensors (401-403), the system comprising:
the sensor head, the positioner of the sensor head, a scan sensor operator (104), a position sensors operator (101), a positioner operator (105), a positioning looper (103), an optimizing looper (102) and a feature determiner (106); wherein
the system (100) is configured to perform, through the positioning looper (103), a positioning loop with positioning iterations to cause the scan sensor (400) to converge to satisfaction of the position requirement, to verify satisfaction or dissatisfaction of the position requirement and, in case of dissatisfaction, to perform, through the optimizing looper (102), an optimizing loop with optimizing iterations until an interaction property results optimized corresponding to satisfaction of the position requirement and, once the position requirement is satisfied, to operate, through the scan sensor operator (104), the scan sensor (400) to irradiate the material and to first sense interaction of said irradiation with the material and detecting, through the feature determiner (106), the physical feature depending on said first sensed interaction; wherein
each of the positioning iterations includes operating, through the position sensors operator (101), each of the position sensors (401-403) to radiate the material and to first sense reflection of said radiation with the material and determining consistency or inconsistency between said first sensed reflection and its associated target reflection and, in case of consistency, quitting the positioning loop and, in case of inconsistency, operating, through the positioner operator (105), the positioner depending on the determined inconsistency to start new iteration of the positioning loop with the sensor head repositioned; and wherein
each of the optimizing iterations includes operating, through the scan sensor operator (104), the scan sensor (400) to irradiate the material and to second sense interaction of said irradiation with the material, obtaining the interaction property from said second sensed interaction and determining whether said interaction property is optimized or non-optimized and, if non-optimized, operating, through the positioner operator (105), the positioner depending on said interaction property to start new iteration of the optimizing loop with the sensor head repositioned and, if optimized, quitting the optimizing loop, operating, through the position sensors operator (101), each of the position sensors (401-403) to radiate the material and to second sense reflection of said radiation with the material and updating the target reflections depending on said second sensed reflections.

## Patentansprüche

1. Verfahren zum berührungslosen Erfassen eines physikalischen Merkmals eines Materials durch einen Sensorkopf und einen Positionierer davon, wobei der Sensorkopf mindestens drei Positionssensoren (401-403) und einen Abtastsensor (400) beinhaltet, die miteinander gekoppelt sind, wobei der Abtastsensor (400) eine Positionsanforderung relativ zu dem Material hat, die mit einer Zielreflexion korreliert ist, die jedem der Positionssensoren (401-403) zugeordnet ist, wobei das Verfahren Folgendes umfasst:
durchführen (201) einer Positionierungsschleife mit Positionierungsiterationen, um zu bewirken, dass der Abtastsensor (400) zur Erfüllung der Positionsanforderung konvergiert, Verifizieren (202, 305) der Erfüllung oder Nichterfüllung der Positionsanforderung und im Falle einer Nichterfüllung durchführen (203) einer Optimierungsschleife mit Optimierungsiterationen, bis eine Wechselwirkungseigenschaft resultiert, die entsprechend der Erfüllung der Positionsanforderung optimiert ist; und
sobald die Positionsanforderung erfüllt ist, Betreiben des Abtastsensors (400), um das Material zu bestrahlen und zuerst die Wechselwirkung der Bestrahlung mit dem Material zu erfassen und das physikalische Merkmal in Abhängigkeit von der ersten erfassten Wechselwirkung zu erfassen (205, 311); wobei
jede der Positionierungsiterationen das Betreiben (301) jedes der Positionssensoren (401-403) beinhaltet, um das Material zu bestrahlen und zuerst die Reflexion der Strahlung mit dem Material zu erfassen und die Konsistenz oder Inkonsistenz zwischen der ersten erfassten Reflexion und ihrer zugehörigen Zielreflexion zu bestimmen (302) und, im Falle einer Konsistenz (304), die Positionierungsschleife zu verlassen und, im Falle einer Inkonsistenz, den Positionierer in Abhängigkeit von der bestimmten Inkonsistenz zu betreiben (303), um eine neue Iteration der Positionierungsschleife mit neu positioniertem Sensorkopf zu beginnen; und wobei
jede der Optimierungsiterationen das Betreiben (306) des Abtastsensors (400) zum Bestrahlen des Materials und zum zweiten Erfassen der Wechselwirkung der Bestrahlung mit dem Material, das Erhalten (307) der Wechselwirkungseigenschaft aus der zweiten erfassten Wechselwirkung und das Bestimmen (309), ob die Wechselwirkungseigenschaft optimiert oder nicht optimiert ist, und, wenn nicht optimiert, das Betreiben (308) des Positionierers in Abhängigkeit von der Wechselwirkungseigenschaft, um eine neue Iteration der Optimierungsschleife mit neu positioniertem Sensorkopf zu starten, und, wenn optimiert, das Verlassen der Optimierungsschleife, das Betreiben (204, 310) jedes der Positionssensoren (401-403) zum Bestrahlen des Materials und zum zweiten Erfassen der Reflexion der Strahlung mit dem Material und das Aktualisieren der Zielreflexionen in Abhängigkeit von den zweiten erfassten Reflexionen beinhaltet.

2. Verfahren zum berührungslosen Erfassen eines physikalischen Merkmals eines Materials nach Anspruch 1, wobei das Aktualisieren der Zielreflexionen in Abhängigkeit von den zweiten erfassten Reflexionen das Bestimmen der zweiten erfassten Reflexionen als die Zielreflexionen beinhaltet.

3. Verfahren zum berührungslosen Erfassen eines physikalischen Merkmals eines Materials nach einem der Ansprüche 1 oder 2, wobei das Aktualisieren der Zielreflexionen in Abhängigkeit von den zweiten erfassten Reflexionen das weitere Aktualisieren der Zielreflexionen in Abhängigkeit von den ersten erfassten Reflexionen und/oder zweiten erfassten Reflexionen von früheren Ausführungen des Verfahrens beinhaltet.

4. Verfahren zum berührungslosen Erfassen eines physikalischen Merkmals eines Materials nach einem der Ansprüche 1 bis 3, wobei die Positionsanforderung des Abtastsensors (400) auf der Grundlage eines erforderlichen vordefinierten Abstands zwischen dem Abtastsensor (400) und einem Punkt oder einer Position einer Zieloberfläche des Materials, womit die Bestrahlung von dem Abtastsensor (400) wechselwirken soll, und/oder auf der Grundlage eines erforderlichen vordefinierten Einfallswinkels oder einer erforderlichen vordefinierten Neigung der Bestrahlung von dem Abtastsensor (400) mit dem Punkt oder der Position der Zieloberfläche vordefiniert ist.

5. Verfahren zum berührungslosen Erfassen eines physikalischen Merkmals eines Materials nach Anspruch 4, wobei die Zielfläche des Materials eine effektive Fläche des Materials ist.

6. Verfahren zum berührungslosen Erfassen eines physikalischen Merkmals eines Materials nach Anspruch 5, wobei das Material ein geschichtetes Material ist und die effektive Oberfläche des Materials einer theoretischen Oberfläche entspricht, welche von der Wechselwirkung abhängt, die durch die Bestrahlung von dem Abtastsensor (400) mit mehreren Schichten des geschichteten Materials zu erfahren ist.

7. Verfahren zum berührungslosen Erfassen eines physikalischen Merkmals eines Materials nach einem der Ansprüche 1 bis 6, wobei die Positionsanforderung des Abtastsensors (400) in Bezug auf das Material vordefiniert ist, in Korrelation mit jeder der Zielreflexionen in einer solchen Weise, dass die Konsistenz oder Entsprechung zwischen jeder der ersten erfassten Reflexionen und ihrer zugeordneten Zielreflexion der Erfüllung der Positionsanforderung entspricht.

8. Verfahren zum berührungslosen Erfassen eines physikalischen Merkmals eines Materials nach einem der Ansprüche 1 bis 7, wobei die Konsistenz oder Entsprechung zwischen jeder der ersten erfassten Reflexionen und ihrer zugehörigen Zielreflexion basierend auf einer absoluten oder nicht absoluten Gleichheit zwischen jeder der ersten erfassten Reflexionen und ihrer zugehörigen Zielreflexion und/oder abhängig von einer Abstandsfunktion zwischen jeder der ersten erfassten Reflexionen und ihrer zugehörigen Zielreflexion bestimmt wird; wobei die nicht absolute Gleichheit einer Gleichheit plus/minus einem akzeptablen Fehler oder einer akzeptablen Toleranz entspricht.

9. Verfahren zum berührungslosen Erfassen eines physikalischen Merkmals eines Materials nach einem der Ansprüche 1 bis 8, wobei jede der ersten erfassten Wechselwirkungen eine erfasste reflexionsbasierte Wechselwirkung und/oder eine erfasste transmissionsbasierte Wechselwirkung beinhaltet oder ist.

10. Verfahren zum berührungslosen Erfassen eines physikalischen Merkmals eines Materials nach einem der Ansprüche 1 bis 9, wobei das Material eine geschichtete Struktur hat, die eine oder mehrere Schichten beinhaltet, und das zu erfassende physikalische Merkmal eine Eigenschaft der geschichteten Struktur ist.

11. Verfahren zum berührungslosen Erfassen eines physikalischen Merkmals eines Materials nach Anspruch 10, wobei das zu erfassende physikalische Merkmal Folgendes umfasst: entweder
eine Dicke von mindestens einer Schicht in der geschichteten Struktur; oder
eine elektrische Eigenschaft von mindestens einer Schicht in der geschichteten Struktur, wobei die elektrische Eigenschaft ein komplexer Brechungsindex, ein Leitwert, ein Widerstand oder eine beliebige Kombination davon ist oder beinhaltet; oder
eine nicht-elektrische Eigenschaft von mindestens einer Schicht in der geschichteten Struktur, wobei die nicht-elektrische Eigenschaft eine Härte, eine Haftung, ein Formationsfehler, ein Formationshohlraum, eine Formationsdiskontinuität oder eine beliebige Kombination davon ist oder beinhaltet.

12. Verfahren zum berührungslosen Erfassen eines physikalischen Merkmals eines Materials nach einem der Ansprüche 1 bis 11, wobei die Optimierungsschleife auf einem Optimierungsverfahren basiert, das darauf abzielt, eine Position des Sensorkopfs zu finden, die eine objektive Funktion optimiert, die die Entwicklung der Wechselwirkungseigenschaft in Abhängigkeit von der Positionierung des Sensorkopfs darstellt.

13. Verfahren zum berührungslosen Erfassen eines physikalischen Merkmals eines Materials nach Anspruch 12, wobei das Optimierungsverfahren auf dem Ausprobieren aller möglichen Positionen des Sensorkopfs basiert, um die eine zu wählen, die die Wechselwirkungseigenschaft maximiert, oder auf einer Gradientenberechnung, die von einem Anfangswert oder von Anfangswerten der Wechselwirkungseigenschaft ausgeht, oder auf einem genetischen Algorithmus oder auf einer Methode der kleinsten Quadrate basiert.

14. Mehrobjektverfahren zum berührungslosen Erfassen eines physikalischen Merkmals in mehreren Instanzen oder Objekten des Materials, wobei das Mehrobjektverfahren das Durchführen eines Verfahrens nach einem der Ansprüche 1 bis 13 für jede der Instanzen oder Objekte des Materials umfasst, um das physikalische Merkmal in jeder der mehreren Instanzen oder Objekte des Materials berührungslos zu erfassen.

15. System (100) zum berührungslosen Erfassen eines physikalischen Merkmals eines Materials durch einen Sensorkopf und einen Positionierer davon, wobei der Sensorkopf mindestens drei Positionssensoren (401-403) und einen Abtastsensor (400) beinhaltet, die miteinander gekoppelt sind, wobei der Abtastsensor (400) eine Positionsanforderung relativ zu dem Material hat, die mit einer Zielreflexion korreliert ist, die jedem der Positionssensoren (401-403) zugeordnet ist, wobei das System Folgendes umfasst:
den Sensorkopf, den Positionierer des Sensorkopfs, einen Abtastsensorbediener (104), einen Positionssensorbediener (101), einen Positioniererbediener (105), eine Positionierungsschleifeinheit (103), eine Optimierungsschleifeinheit (102) und einen Merkmalsbestimmer (106); wobei
das System (100) dazu konfiguriert ist, durch die Positionierungsschleifeinheit (103) eine Positionierungsschleife mit Positionierungsiterationen durchzuführen, um zu bewirken, dass der Abtastsensor (400) zur Erfüllung der Positionsanforderung konvergiert, um die Erfüllung oder Nichterfüllung der Positionsanforderung zu überprüfen, und um im Falle einer Nichterfüllung durch die Optimierungsschleifeinheit (102) eine Optimierungsschleife mit Optimierungsiterationen durchzuführen, bis eine Wechselwirkungseigenschaft resultiert, die entsprechend der Erfüllung der Positionsanforderung optimiert ist, und um, sobald die Positionsanforderung erfüllt ist, den Abtastsensor (400) durch den Abtastsensorbediener (104) zu betreiben, um das Material zu bestrahlen und die Wechselwirkung der Bestrahlung mit dem Material zuerst zu erfassen und das physikalische Merkmal in Abhängigkeit von der ersten erfassten Wechselwirkung durch den Merkmalsbestimmer (106) zu erfassen; wobei
jede der Positionierungsiterationen das Betreiben jeder der Positionssensoren (401-403) durch den Positionssensorbediener (101), um das Material zu bestrahlen und zuerst die Reflexion der Strahlung mit dem Material zu erfassen und Konsistenz oder Inkonsistenz zwischen der ersten erfassten Reflexion und ihrer zugehörigen Zielreflexion zu bestimmen und, im Falle von Konsistenz, die Positionierungsschleife zu verlassen und, im Falle von Inkonsistenz, durch den Positioniererbediener (105) den Positionierer in Abhängigkeit von der bestimmten Inkonsistenz zu betreiben, um eine neue Iteration der Positionierungsschleife mit neu positioniertem Sensorkopf zu beginnen; und wobei
jede der Optimierungsiterationen das Betreiben des Abtastsensors (400) durch den Abtastsensorbediener (104), um das Material zu bestrahlen, und das zweite Erfassen der Wechselwirkung der Bestrahlung mit dem Material, das Erhalten der Wechselwirkungseigenschaft aus der zweiten erfassten Wechselwirkung und das Bestimmen, ob die Wechselwirkungseigenschaft optimiert oder nicht optimiert ist, und, wenn nicht optimiert, das Betreiben des Positionierers durch den Positionierbediener (105) in Abhängigkeit von der Wechselwirkungseigenschaft, um eine neue Iteration der Optimierungsschleife mit neu positioniertem Sensorkopf zu starten, und, wenn optimiert, das Verlassen der Optimierungsschleife, das Betreiben jedes der Positionssensoren (401-403) durch den Positionssensorbediener (101), um das Material zu bestrahlen, und das zweite Erfassen der Reflexion der Strahlung mit dem Material und das Aktualisieren der Zielreflexionen in Abhängigkeit von den zweiten erfassten Reflexionen beinhaltet.

## Revendications

1. Procédé de détection sans contact d'une caractéristique physique d'un matériau à travers une tête de capteur et un positionneur de celle-ci, la tête de capteur comprenant au moins trois capteurs de position (401-403) et un capteur de balayage (400) couplés les uns aux autres, le capteur de balayage (400) ayant une exigence de position par rapport au matériau corrélée à une réflexion cible associée à chacun des capteurs de position (401-403), le procédé comprenant :
effectuer (201) une boucle de positionnement avec des itérations de positionnement pour faire converger le capteur de balayage (400) à la satisfaction de l'exigence de position, vérifier (202, 305) la satisfaction ou l'insatisfaction de l'exigence de position et, en cas d'insatisfaction, effectuer (203) une boucle d'optimisation avec des itérations d'optimisation jusqu'à ce qu'une propriété d'interaction soit optimisée correspondant à la satisfaction de l'exigence de position ; et
une fois que l'exigence de position est satisfaite, actionner le capteur de balayage (400) pour irradier le matériau et pour une première détection d'interaction de ladite irradiation avec le matériau et détecter (205, 311) la caractéristique physique en fonction de ladite première interaction détectée ; dans lequel
chacune des itérations de positionnement comprend l'actionnement (301) de chacun des capteurs de position (401-403) pour rayonner le matériau et pour une première détection de réflexion dudit rayonnement avec le matériau et déterminer (302) la cohérence ou l'incohérence entre ladite première réflexion détectée et sa réflexion cible associée et, en cas de cohérence (304), quitter la boucle de positionnement et, en cas d'incohérence, actionner (303) le positionneur en fonction de l'incohérence déterminée pour démarrer une nouvelle itération de la boucle de positionnement avec la tête de capteur repositionnée ; et dans lequel
chacune des itérations d'optimisation comprend l'actionnement (306) du capteur de balayage (400) pour irradier le matériau et pour une seconde détection d'interaction de ladite irradiation avec le matériau, l'obtention (307) de la propriété d'interaction à partir de ladite seconde interaction détectée et la détermination (309) si ladite propriété d'interaction est optimisée ou non optimisée et, si elle n'est pas optimisée, l'actionnement (308) du positionneur en fonction de ladite propriété d'interaction pour démarrer une nouvelle itération de la boucle d'optimisation avec la tête de capteur repositionnée et, si elle est optimisée, quitter la boucle d'optimisation, l'actionnement (204, 310) de chacun des capteurs de position (401-403) pour rayonner le matériau et pour une seconde détection de réflexion dudit rayonnement avec le matériau et la mise à jour des réflexions cibles en fonction desdites secondes réflexions détectées.

2. Procédé de détection sans contact d'une caractéristique physique d'un matériau selon la revendication 1, dans lequel la mise à jour des réflexions cibles en fonction desdites secondes réflexions détectées comprend la désignation desdites secondes réflexions détectées en tant que réflexions cibles.

3. Procédé de détection sans contact d'une caractéristique physique d'un matériau selon l'une quelconque des revendications 1 ou 2, dans lequel la mise à jour des réflexions cibles en fonction desdites secondes réflexions détectées comprend la mise à jour des réflexions cibles en outre en fonction des premières réflexions détectées et/ou des secondes réflexions détectées à partir des exécutions précédentes du procédé.

4. Procédé de détection sans contact d'une caractéristique physique d'un matériau selon l'une quelconque des revendications 1 à 3, dans lequel l'exigence de position du capteur de balayage (400) est prédéfinie sur la base d'une distance prédéfinie requise entre le capteur de balayage (400) et un point ou une position d'une surface cible du matériau où l'irradiation du capteur de balayage (400) doit interagir, et/ou sur un angle d'incidence prédéfini requis ou une inclinaison de l'irradiation du capteur de balayage (400) avec ledit point ou ladite position de la surface cible.

5. Procédé de détection sans contact d'une caractéristique physique d'un matériau selon la revendication 4, dans lequel la surface cible du matériau est une surface efficace du matériau.

6. Procédé de détection sans contact d'une caractéristique physique d'un matériau selon la revendication 5, dans lequel le matériau est un matériau en couches et la surface efficace du matériau correspond à une surface théorique qui dépend de l'interaction à subir par l'irradiation du capteur de balayage (400) avec plusieurs couches du matériau en couches.

7. Procédé de détection sans contact d'une caractéristique physique d'un matériau selon l'une quelconque des revendications 1 à 6, dans lequel l'exigence de position du capteur de balayage (400) par rapport au matériau est prédéfinie en corrélation avec chacune des réflexions cibles de manière à ce que la cohérence ou la correspondance entre chacune des premières réflexions détectées et sa réflexion cible associée corresponde à la satisfaction de l'exigence de position.

8. Procédé de détection sans contact d'une caractéristique physique d'un matériau selon l'une quelconque des revendications 1 à 7, dans lequel la cohérence ou la correspondance entre chacune des premières réflexions détectées et sa réflexion cible associée est déterminée sur la base d'une égalité absolue ou non absolue entre chacune des premières réflexions détectées et sa réflexion cible associée et/ou en fonction d'une fonction de distance entre chacune des premières réflexions détectées et sa réflexion cible associée ; dans lequel l'égalité non absolue correspond à l'égalité plus/moins une erreur ou une tolérance acceptable.

9. Procédé de détection sans contact d'une caractéristique physique d'un matériau selon l'une quelconque des revendications 1 à 8, dans lequel chacune des premières interactions détectées comprend ou est une interaction basée sur la réflexion détectée et/ou une interaction basée sur la transmission détectée.

10. Procédé de détection sans contact d'une caractéristique physique d'un matériau selon l'une quelconque des revendications 1 à 9, dans lequel le matériau a une structure en couches comprenant une ou plusieurs couches et la caractéristique physique à détecter est une propriété de la structure en couches.

11. Procédé de détection sans contact d'une caractéristique physique d'un matériau selon la revendication 10, dans lequel la caractéristique physique à détecter comprend soit
une épaisseur d'au moins une couche dans la structure en couches ; ou
une propriété électrique d'au moins une couche dans la structure en couches, ladite propriété électrique étant ou comprenant un indice de réfraction complexe, une conductance, une résistance ou toute combinaison de ceux-ci ; ou
une propriété non électrique d'au moins une couche dans la structure en couches, ladite propriété non électrique étant ou comprenant une dureté, une adhérence, un défaut de formation, un vide de formation, une discontinuité de formation, ou toute combinaison de ceux-ci.

12. Procédé de détection sans contact d'une caractéristique physique d'un matériau selon l'une quelconque des revendications 1 à 11, dans lequel la boucle d'optimisation est basée sur un procédé d'optimisation visant à trouver une position de la tête de capteur qui optimise une fonction objective représentant l'évolution de la propriété d'interaction en fonction du positionnement de la tête de capteur.

13. Procédé de détection sans contact d'une caractéristique physique d'un matériau selon la revendication 12, dans lequel le procédé d'optimisation est basé sur l'essai de toutes les positions possibles de la tête de capteur pour sélectionner celle qui maximise la propriété d'interaction, ou basé sur le calcul du gradient à partir d'une valeur ou de valeurs initiales de la propriété d'interaction, ou basé sur un algorithme génétique, ou basé sur un procédé des moindres carrés.

14. Procédé multi-objet de détection sans contact d'une caractéristique physique dans de multiples instances ou objets dudit matériau, le procédé multi-objet comprenant la réalisation, pour chacune des instances ou objets dudit matériau, d'un procédé selon l'une quelconque des revendications 1 à 13 pour détecter sans contact la caractéristique physique dans chacune des multiples instances ou objets dudit matériau.

15. Système (100) pour détecter sans contact une caractéristique physique d'un matériau à travers une tête de capteur et un positionneur de celle-ci, la tête de capteur comprenant au moins trois capteurs de position (401-403) et un capteur de balayage (400) couplés les uns aux autres, le capteur de balayage (400) ayant une exigence de position par rapport au matériau corrélée à une réflexion cible associée à chacun des capteurs de position (401-403), le système comprenant :
la tête de capteur, le positionneur de la tête de capteur, un actionneur de capteur de balayage (104), un actionneur de capteurs de position (101), un actionneur de positionneur (105), un boucleur de positionnement (103), un boucleur d'optimisation (102) et un déterminateur de caractéristique (106) ; dans lequel :
le système (100) est configuré pour effectuer, par l'intermédiaire du boucleur de positionnement (103), une boucle de positionnement avec des itérations de positionnement pour faire converger le capteur de balayage (400) à la satisfaction de l'exigence de position, pour vérifier la satisfaction ou l'insatisfaction de l'exigence de position et, en cas d'insatisfaction, pour effectuer, par l'intermédiaire du boucleur d'optimisation (102), une boucle d'optimisation avec des itérations d'optimisation jusqu'à ce qu'une propriété d'interaction soit optimisée correspondant à la satisfaction de l'exigence de position et, une fois l'exigence de position satisfaite, pour actionner, par l'intermédiaire de l'actionneur de capteur de balayage (104), le capteur de balayage (400) pour irradier le matériau et pour une première détection d'interaction de ladite irradiation avec le matériau et détecter, par l'intermédiaire du déterminateur de caractéristique (106), la caractéristique physique en fonction de ladite première interaction détectée ; dans lequel
chacune des itérations de positionnement comprend l'actionnement, par l'intermédiaire de l'actionneur de capteurs de position (101), de chacun des capteurs de position (401-403) pour rayonner le matériau et pour une première détection de réflexion dudit rayonnement avec le matériau et déterminer la cohérence ou l'incohérence entre ladite première réflexion détectée et sa réflexion cible associée et, en cas de cohérence, quitter la boucle de positionnement et, en cas d'incohérence, actionner, par l'intermédiaire de l'actionneur de positionneur (105), le positionneur en fonction de l'incohérence déterminée pour démarrer une nouvelle itération de la boucle de positionnement avec la tête de capteur repositionnée ; et dans lequel
chacune des itérations d'optimisation comprend l'actionnement, par l'intermédiaire de l'actionneur de capteur de balayage (104), du capteur de balayage (400) pour irradier le matériau et pour une seconde détection d'interaction de ladite irradiation avec le matériau, l'obtention de la propriété d'interaction à partir de ladite seconde interaction détectée et la détermination si ladite propriété d'interaction est optimisée ou non optimisée et, si elle n'est pas optimisée, l'actionnement, par l'intermédiaire de l'actionneur de positionneur (105), du positionneur en fonction de ladite propriété d'interaction pour démarrer une nouvelle itération de la boucle d'optimisation avec la tête de capteur repositionnée et, si elle est optimisée, quitter la boucle d'optimisation, l'actionnement, par l'intermédiaire de l'actionneur de capteurs de position (101), de chacun des capteurs de position (401-403) pour rayonner le matériau et pour une seconde détection de réflexion dudit rayonnement avec le matériau et la mise à jour des réflexions cibles en fonction desdites secondes réflexions détectées.
